# EUROPEAN PATENT SPECIFICATION

(11) **EP 0 820 410 B1**
(45) Date of publication and mention of the grant of the patent: **15.12.1999**
(21) Application number: 97902577.2
(22) Date of filing: 07.02.1997
(51) Int. Cl.: B65D 41/12, C08K 3/08

(54) **A LID, PARTICULARLY FOR FOODSTUFF CONTAINERS, AND THE PROCESS USED FOR ITS MANUFACTURE**
DECKEL FÜR LEBENSMITTELBEHÄLTER UND VERFAHREN ZU DESSEN HERSTELLUNG
COUVERCLE, DESTINE EN PARTICULIER AUX RECIPIENTS A DENREES ALIMENTAIRES ET SON PROCEDE DE FABRICATION

(30) Priority: 13.02.1996 IT BO960065
(43) Date of publication of application: 28.01.1998
(73) Proprietor: PELLICONI & C. S.p.A., 40064 Ozzano Dell'Emilia (Bologna) (IT)
(72) Inventor: FOLCHINI, Enrico, I-45030 Occhiobello (IT); SCHIARETTI, Marziano, I-40064 Ozzano Emilia (IT); MICHELINI, Fabrizio, I-44100 Ferrara (IT)
(74) Representative: Lanzoni, Luciano
(86) International application number: PCT/IT97/00029
(87) International publication number: WO 97/29968

(56) References cited:
- GB-A- 1 504 751
- GB-A- 1 515 479
- GB-A- 2 001 079
- US-A- 4 835 035
- PATENT ABSTRACTS OF JAPAN vol. 007, no. 175 (C-179), 3 March 1983 & JP 58 083033 A (TOYO ALUMINIUM KK), 18 May 1983,

## Description

### Technical Field

The present invention relates to a lid, as it is generally known, for foodstuff containers, in particular for use in prize competitions in which an inscription is placed on the inside of the lid.

In particular, it should be noticed that the lid concerned may be used to seal glass bottles designed to contain liquid foodstuffs, under pressure or not, which may or may not undergo heat treatment. In such cases, the said lid is a crown cap which guarantees the seal between the air and the container. More precisely, the cap in question has a removable PVC - free seal with an inscription on the side which faces the bottom of the lid. PVC - free means those materials which do not contain polyvinyl chloride, the use of which continues to be reduced, especially in Northern European countries. The afore-mentioned internal inscription makes the lids particularly suitable for use in prize competitions.

### Background Art

At present, in accordance with the prior art and for particular commercial requirements, three different types of caps suitable for prize competitions are used.

The first type consists of a cap in the form of a metallic shell, the internal side having a bottom upon which an opaque PVC seal is applied after treatment with adhesive paint. Given its affinity with the paint, the said seal is easily detached, so that an inscription present on the bottom of the cap can be read.

The second type of cap, again having an opaque PVC seal, differs from the first in that the inscription is made in such a way that it is transferred from the shell to the seal itself: therefore, this type of cap is ideal for use when the seal must be used as proof of a win, since it is easier to send a seal rather than the entire cap.

The third type of cap has a transparent seal (PVC or PVC - free) which cannot be detached from the bottom of the cap. There is an inscription on the bottom of the cap itself, clearly visible through the seal. However, this cap is impractical for use in prize competitions, since the entire cap is required as proof of a win, being less convenient than the second type of cap, since, as already indicated, it is easier to post a seal than a cap. A further disadvantage of this third type of cap is that a sufficiently opaque bottle is required, to prevent the inscription being read from the outside of the bottle.

None of the three types of PVC-based crown caps made according to the prior art can be marketed in those states in which the law forbids the use of PVC crown caps.

To comply with such regulations and requirements and, at the same time, obtain a cap which has an easily detachable PVC - free seal, a new technology designed to control the adhesion of the PVC - free material to the cap is needed.

### Disclosure of the Invention

The main object of the present invention is to overcome the afore-mentioned disadvantages of the known types of caps, by providing a cap with a PVC - free seal which, if necessary, can easily be detached from the bottom of the lid shell.

A further aim of the present invention is to create an inscription which is easily and clearly transferable to the seal, without the seal adhering to the adhesive paint spread on the bottom of the lid, using a process which is able to control the adhesion of the seal to the shell of the lid.

Another aim of the present invention is to provide a simple, reliable operating process.

The technical specifications of the present invention and the process used, according to the afore-mentioned aims, are clearly described in the claims, and the advantages are apparent from the detailed description which follows with reference to the accompanying drawings, which illustrate a preferred embodiment, and in which:

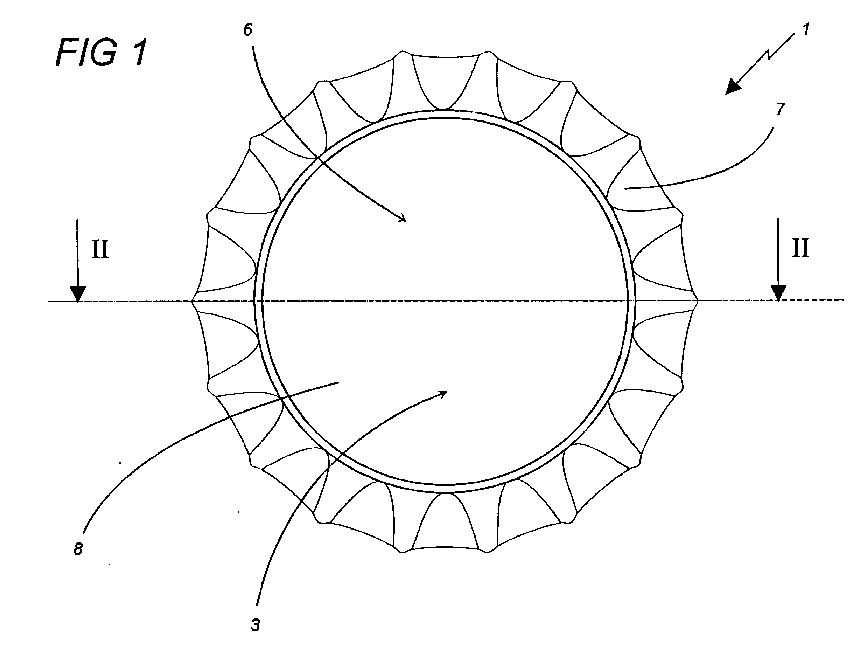

figure 1 is a schematic plan view from below of a lid as disclosed;
figure 2 is a schematic view of the lid, according to cross-section II - II shown in figure 1, with some parts cut away to better illustrate others;
figure 3 is an enlarged detail of the drawing of the crown cap with detached seal shown in figure 2;
figure 4 shows a lid as illustrated in the previous figures, in a configuration in which the seal is partially detached and with the transfer of an internal inscription.

In the embodiment illustrated, the lid consists of a cap for bottles designed to contain liquid foodstuffs which must not come into contact with the atmosphere. More specifically, it is a crown cap, generally used to seal glass bottles containing liquid foodstuffs which may or may not be under pressure, such as water, wine, various beverages, etc.

With reference to the accompanying drawings, the lid disclosed consists of a crown cap, indicated as a whole by the numeral 1.

The said cap 1 basically consists of a metallic shell 3, which can be attached to the top of a bottle (not illustrated), and has a concave surface 5 defining a bottom 6, the edge of which is delimited by a crown 7. The cap 1 also has a PVC - free seal 8 (i.e.: made of a material which does not contain polyvinyl chloride) which is approximately the same size as the bottom 6.

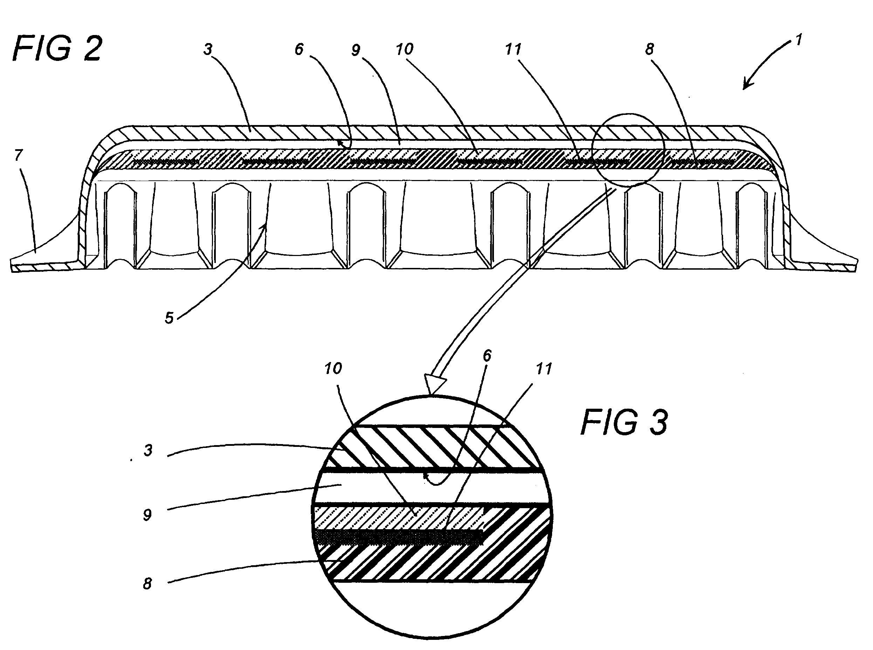

Paint 9 is used to stick the seal 8 to the bottom 6 (see figure 2).

More precisely, the method used to manufacture the crown cap 1 in question begins with a sheet of metal. The lithographic print defining the designs which will appear on the outside of the cap (usually the product trade-mark) are made on one side of this sheet of metal, whilst the afore-mentioned layer of paint 9 is spread on the other side.

The sheet then goes through the stages of cutting and formation of the shell which create the cap 1. Finally, the cap 1 is passed inside a heating station, where the paint is melted and acts as an adhesive for a seal 8 which is poured into the cap 1, then formed by a corresponding press which gives it the desired shape.

For the present invention, the said paint 9 consists of a mixture of synthetic resins and a hydrocarbon compound with added metallic pigment that is neither heavy nor toxic.

The addition of the metallic pigment allows the adhesion of the seal 8 to the bottom 6 of the cap 1 to be controlled: the greater the concentration of the metallic pigment in the hydrocarbon compound, the more the paint 9 reproduces the chemical-physical specifications of the metallic shell 3.

As a result, the adhesion of the seal 8 to the shell 3 is reduced.

More specifically, the metallic pigment may be dosed in such a way as to ensure that the seal 8 remains stuck to the bottom 6 of the cap 1 and, at the same time, make it easy to detach by lifting it off with, for example, a fingernail.

The paint 9 described basically consists of the following variable quantities of components, in the weight percentages indicated.
- 2-butoxyethanol 15-25%
- aromatic hydrocarbons C9-C11 5-15%
- n-butanol 1-5%
- xylol 1-5%
- isobutanol 5-15%
- 2(2-butoxyethoxy) ethanol 1-5%
- synthetic resins 30-40%
- methyl isobutyl ketone 1-5%
- methoxypropanol 10-20%
- metallic pigments 1-5%

A film 10 of transparent or pigmented material is placed between the paint 9 and the seal 8, said film bearing an inscription 11, obtained using a UV ink. The latter is a special ink, which can be dried and fixed in UV ray ovens. The film 10 is only placed on a limited painted area of the bottom 6 of the cap 1, where the inscription 11 is made.

The said film 10 basically consists of organic pigments, aliphatic hydrocarbon fractions, polyester-, amino- and wax resins. Thanks to the composition of the film 10, the inscription 11 with UV ink positioned precisely over the area treated with the film 10 only slightly adheres to said film 10 and, as a result, adheres much more to the seal 8 with which the inscription 11 is in contact.

The UV ink basically consists of: organic pigments, amino- and/or polyester- and/or epoxy- resins, acrylic oligomers consisting of di- and tri- esters of polyfunctional alcohols with acrylic acid, benzophenone and/or complex ketones or their derivatives, polyethylene waxes.

The following is a description of the process for the creation of the structure of the lid 1.

First, the paint 9 is prepared by mixing the synthetic resins with a hydrocarbon compound to which a metallic pigment has been added.

Then, the paint 9 is spread on one side of a sheet of material, normally metallic, with mechanical specifications suitable for obtaining the shell 3 of the cap 1.

Depending on specific requirements, the said sheet consists of chrome-plated steel, tin-plated steel, or stainless steel and aluminium.

The paint 9 is then dried in conventional ovens at temperatures which vary between 150 and 250°C, this drying process lasting 5 - 20 minutes. The temperature is preferably kept within the smallest interval of 180 - 190°C for a period of 11 - 13 minutes.

In a later stage of the process, if the cap 1 is to be used to set commercial prize competitions, the film 10 is applied over the paint 9. It is applied by using a special lithographic plate to lay the said film 10 only in the painted areas in which the inscription 11 is to be obtained.

The film 10 is then dried in a second drying operation, identical to that used to dry the paint 9.

In another stage, the inscription 11 is made on the painted areas covered by the film 10. The inscription 11 is preferably made using the same plate that was used to apply the film 10, and using UV ink with the afore-said specifications and composition.

The sheet thus treated is ready to be cut, thus obtaining the shells. A PVC - free seal 8 is attached to each of the shells, so as to guarantee the seal between the cap 1 and the bottle.

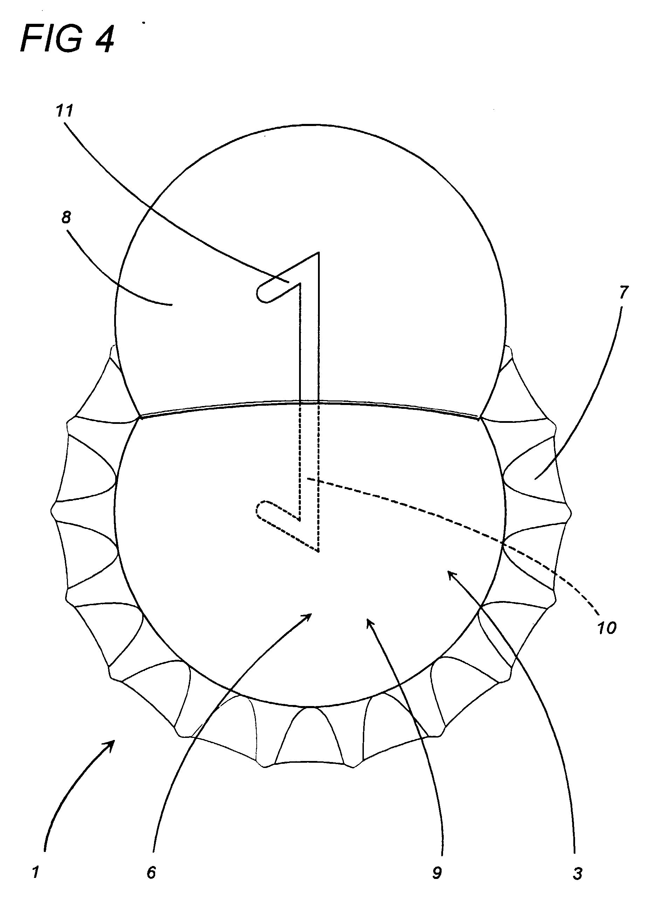

The above description clearly indicates one of the advantages of the present invention. That is to say, when the seal 8 is detached from the bottom 6 of the cap 1, the seal 8 bears only the inscription 11 (as clearly shown in figure 4).

The use of a paint which contains a metallic pigment allows the stage in which the seal 8 is detached from the lid 1 to be controlled, leaving the mechanical specifications and seal of the crown cap as a whole unchanged, this being an important factor for the bottlers who use it.

In particular, this bilateral control of the adherence of the seal 8 to the lid 1 and limited adherence of the inscription 11 to the film 10 at the bottom of the lid 1 is, above all, a result of the identification of components suitable for obtaining a substance compatible with and acting upon the PVC - free material, without the latter losing any of the advantageous specifications present.

The present invention may be subject to numerous modifications and variations, all of which are encompassed by the design concept. Moreover, all parts may be substituted with technically equivalent parts.

## Claims

1. A lid for foodstuffs of the type which includes:
- a shell (3) shaped in such a way that it can be fitted over an opening in a container, said shell having a bottom (6) whose shape corresponds to the mouth of the container, said bottom (6) facing the inside of the container when the lid (1) is closed;
- a seal (8), of the PVC - free type, said seal being attached to the bottom (6) and sealing the lid (1) onto the container;
- an adhesive paint (9) applied over the surface of the said bottom (6) to join the seal (8) to the bottom (6), characterised in that the said paint (9) includes a hydrocarbon compound with at least one metallic pigment, so that the seal (8) can, if necessary, easily be detached from the bottom (6) of the shell (3).

2. The lid as described in claim 1, characterised in that the paint (9) basically consists of the following components: 2-butoxyethanol, aromatic hydrocarbons C9-C11, n-butanol, xylol, isobutanol, 2(2-butoxyethoxy) ethanol, synthetic resins, methyl isobutyl ketone, methoxypropanol and metallic pigments.

3. The lid as described in claim 2, characterised in that the components of the paint (9) are respectively present in the following weight percentage intervals: 2-butoxyethanol 15-25%, aromatic hydrocarbons C9-C11 5-15%, n-butanol 1-5%, xylol 1-5%, isobutanol 5-15%, 2(2-butoxyethoxy) ethanol 1-5%, synthetic resins 30-40%, methyl isobutyl ketone 1-5%, methoxypropanol 10-20% and metallic pigments 1-5%.

4. The lid as described in claim 1, characterised in that the seal (8) is easily manually detached from the bottom (6) of the shell (3).

5. The lid as described in claim 1, characterised in that an inscription (11) is reproduced on the seal (8) which adheres to the paint (9) on the shell (3), and that at the said inscription (11) a non-stick film (10) is positioned between the paint (9) and the inscription (11), to reduce the adhesion of the inscription (11) to the paint (9), thus creating greater adhesion of the inscription (11) to the seal (8) side.

6. The lid as described in claim 5, characterised in that the film (10) consists of organic pigments, aliphatic hydrocarbon fractions, polyester-, amino- and wax resins.

7. The lid as described in claim 5, characterised in that the film (10) is made of a transparent material.

8. The lid as described in claim 5, characterised in that the film (10) is made of a pigmented material.

9. The lid as described in claim 5, characterised in that the inscription (11) is made using a UV ink which can be dried in UV ray ovens.

10. The lid as described in claim 9, characterised in that the said UV ink consists of: organic pigments, amino- and polyester- and epoxy- resins, acrylic oligomers consisting of di- and tri- esters of polyfunctional alcohols with acrylic acid, benzophenone and complex ketones or their derivatives, polyethylene waxes.

11. The lid as described in claim 1, characterised in that the lid (1) consists of a bottle cap including a shaped metallic shell (3), preferably in the shape of a crown (7) and a seal (8) which does not contain polyvinyl chloride.

12. The lid as described in claim 1, characterised in that the metallic pigment consists of a metal which is neither heavy nor toxic.

13. Process for making a lid according to claims 1 to 12, characterised in that it includes the following operating stages:
- mixing of synthetic resins with a hydrocarbon compound to which at least one metallic pigment is added, to obtain the paint (9);
- spreading of the paint (9) on one side of a sheet of metal suitable for making the shells;
- drying of the paint (9);
- application of a film (10) over the paint (9) in the areas in which an inscription (11) will be positioned;
- drying of the film (10);
- creation of the inscription (11) in the areas in which the film (10) is applied, said inscription (11) adhering less to the film (10) placed over the paint (9), than to the seal (8) which is then laid over it;
- cutting and forming of the shells (3) into the desired shape;
- application of the seal (8) to the paint (9) on the bottom (6) of the shell (3) and over the inscription (11).

14. The process as described in claim 13, characterised in that the film (10) is applied using a first plate.

15. The process as described in claim 13, characterised in that the drying stages are carried out at temperatures which vary between 150 and 250°C and with drying times of 5-20 minutes.

16. The process as described in claim 13, characterised in that the inscription (11) is applied using a second plate.

17. The process as described in claim 13, characterised in that the film (10) and inscription (11) are applied using the same plate.

18. The process as described in claim 13, characterised in that the inscription (11) is printed in UV ink.

## Patentansprüche

1. Deckel für Lebensmittelbehälter vom Typ, welcher wie folgt enthält:
- eine Schale (3), die auf solche Weise geformt ist, dass sie über einer Öffnung in einem Behälter angebracht werden kann, wobei die genannte Schale einen Boden (6) aufweist, dessen Form der Öffnung des Behälters entspricht, und wobei der genannte Boden (6) der Innenseite des Behälters zugewandt ist, wenn der Deckel (1) geschlossen ist;
- eine Dichtung (8) aus PVC vom Typ 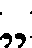 free", wobei die genannte Dichtung an dem Boden (6) befestigt ist und den Deckel (1) auf dem Behälter abdichtet;
- eine Haftende Farbe (9), aufgetragen auf die Oberfläche des genannten Bodens (6), um die Dichtung (8) mit dem Boden (6) zusammenzufügen, **dadurch gekennzeichnet**, dass die genannte Farbe (9) eine Kohlenwasserstoffverbindung mit wenigstens einem metallenen Pigment enthält, so dass die Dichtung (8), falls erforderlich, leicht von dem Boden (6) der Schale (3) gelöst werden kann.

2. Deckel nach Patentanspruch 1, **dadurch gekennzeichnet**, dass die Farbe (9) grundlegend aus folgenden Komponenten besteht: 2-Butoxyäthanol, aromatische Kohlenwasserstoffe C9-C11, n-Butanol, Xylol, Isobutanol, 2(2-Butoxyäthoxy)Äthanol, synthetische Harze, Methyl-Isobutyl-Keton, Methoxypropanol und metallene Pigmente.

3. Deckel nach Patentanspruch 2, **dadurch gekennzeichnet**, dass die Komponenten der Farbe (9) jeweils in den folgenden Gewichtsanteilen vorhanden sind: 2-Butoxyäthanol 15-25%, aromatische Kohlenwasserstoffe C9-C11 5-15%, n-Butanol 1-5%, Xylol 1-5%, Isobutanol 5-15, 2(2-Butoxyäthoxy)Äthanol 1-5%, synthetische Harze 30-40%, Methyl-Isobutyl-Keton 1-5%, Methoxypropanol 10-20% und metallene Pigmente 1-5%.

4. Deckel nach Patentanspruch 1, **dadurch gekennzeichnet**, dass die Dichtung (8) leicht von Hand von dem Boden (6) der Schale (3) gelöst werden kann.

5. Deckel nach Patentanspruch 1, **dadurch gekennzeichnet**, dass eine Beschriftung (11) auf der Dichtung (8) angebracht ist, welche an der Farbe (9) der Schale (3) anhaftet, und dass an der genannten Beschriftung (11) ein nicht haftender Film (10) zwischen der Farbe (9) und der Beschriftung (11) angeordnet ist, um das Anhaften der Beschriftung (11) an der Farbe (9) zu reduzieren und somit ein stärkeres Anhaften der Beschriftung (11) auf der Seite der Dichtung (8) zu bewirken.

6. Deckel nach Patentanspruch 5, **dadurch gekennzeichnet**, dass der Film (10) aus organischen Pigmenten, Fettkohlenwasserstoffanteilen, Polyester-, Amino- und Wachsharzen besteht.

7. Deckel nach Patentanspruch 5, **dadurch gekennzeichnet**, dass der Film aus Klarsichtmaterial hergestellt ist.

8. Deckel nach Patentanspruch 5, **dadurch gekennzeichnet**, dass der Film (10) aus pigmentiertem Material hergestellt ist.

9. Deckel nach Patentanspruch 5, **dadurch gekennzeichnet**, dass die Beschriftung (11) unter Verwendung von UV-Farbe hergestellt ist, welche in Öfen mit UV-Bestrahlung getrocknet werden kann.

10. Deckel nach Patentanspruch 1, **dadurch gekennzeichnet**, dass der Deckel (1) aus einer Flaschenkappe besteht, enthaltend eine vorzugsweise in Form einer Krone (7) ausgebildete metallene Schale (3) und eine Dichtung (8), welche kein Polyvinylchlorid enthält.

11. Deckel nach Patentanspruch 1, **dadurch gekennzeichnet**, dass das metallene Pigment aus einem Metall besteht, welches weder schwer noch toxisch ist.

12. Deckel nach Patentanspruch 9, **dadurch gekennzeichnet**, dass die genannte UV-Farbe aus folgenden Komponenten besteht: organische Pigmente, Amino-, Polyester- und Epoxydharze, Akryloligomere, bestehend aus Di- und Tri-Estern von polyfunktionellen Alkoholen mit Akrylsäure, Benzophenonen und Ketonkomplexen oder deren Derivaten, Polyäthylenwachsen.

13. Verfahren zur Herstellung eines Deckels nach den Patentansprüchen von 1 bis 12, **dadurch gekennzeichnet**, dass es die folgenden Arbeitsgänge beeinhaltet:
- Mischen von synthetischen Harzen mit einer Kohlenwasserstoffverbindung, welcher wenigstens ein metallenes Pigment hinzugefügt ist, um die Farbe (9) zu erhalten;
- Auftragen der Farbe (9) auf eine Seite eines Metallbleches, das zur Herstellung der Schalen geeignet ist;
- Trocknen der Farbe (9);
- Anbringen eines Films (10) auf der Farbe (9) in den Bereichen, in denen eine Beschriftung (11) angebracht werden soll;
- Trocknen des Films (10);
- Realisierung einer Beschriftung (11) in den Bereichen, in denen der Film (10) angebracht ist, wobei die genannte Beschriftung (11) weniger an dem über der Farbe (9) angeordneten Film (10) anhaftet als an der Dichtung (8), welche dann darüber liegt;
- Zuschneiden und Ausbilden der Schalen (3) in die gewünschte Form:
- Anbringen der Dichtung (8) an der Farbe (9) am Boden (6) der Schale (3) und über der Beschriftung (11).

14. Verfahren nach Patentanspruch 13, **dadurch gekennzeichnet**, dass der Film (10) unter Verwendung einer ersten Platte aufgetragen wird.

15. Verfahren nach Patentanspruch 13, **dadurch gekennzeichnet**, dass die Trockenphasen bei Temperaturen durchgeführt werden, die zwischen 150 und 250°C variieren und mit Trockenzeiten von 5-20 Minuten.

16. Verfahren nach Patentanspruch 13, **dadurch gekennzeichnet**, dass die Beschriftung (11) unter Verwendung einer zweiten Platte aufgetragen wird.

17. Verfahren nach Patentanspruch 13, **dadurch gekennzeichnet**, dass der Film (10) und die Beschriftung (11) unter Verwendung der gleichen Platte aufgetragen werden.

18. Verfahren nach Patentanspruch 13, **dadurch gekennzeichnet**, dass die Beschriftung (11) in UV-Farbe aufgedruckt wird.

## Revendications

1. Couvercle pour denrées alimentaires du type comprenant :
- une coque (3) conformée de façon à pouvoir être placée sur une ouverture d'un récipient, ladite coque ayant un fond (6) dont la forme correspond à l'ouverture du récipient, ledit fond (6) étant orienté vers l'intérieur du récipient quand le couvercle (1) est fermé ;
- un joint (8) du type en PVC - free, ledit joint étant attaché au fond (6) et étant destiné à fermer hermétiquement le couvercle (1) sur le récipient ;
- un vernis adhésif (9) appliqué sur la surface du fond (6) en question pour unir le joint (8) au fond (6), caractérisé en ce que ledit vernis (9) comprend un hydrocarbure avec au moins un pigment métallique, de façon à pouvoir, si nécessaire, détacher facilement le joint (8) du fond (6) de la coque (3).

2. Couvercle selon la revendication 1, caractérisé en ce que le vernis (9) se compose essentiellement des composés suivants : 2-butoxyéthanol, hydrocarbures aromatiques C9-C11, n-butanol, xylol, isobutanol, 2(2-butoxyéthoxy) éthanol, résines synthétiques, méthylisobutylcétone, méthoxypropanol et pigments métalliques.

3. Couvercle selon la revendication 2, caractérisé en ce que les composés du vernis (9) sont respectivement présents dans les intervalles de poids suivants, exprimés en % : 2-butoxyéthanol 15-25 %, hydrocarbures aromatiques C9-C11 5-15 %, n-butanol 1-5 %, xylol 1-5 %, isobutanol 5-15 %, 2(2-butoxyéthoxy) éthanol 1-5 %, résines synthétiques 30-40 %, méthylisobutylcétone 1-5 %, méthoxypropanol 10-20 % et pigments métalliques 1-5 %.

4. Couvercle selon la revendication 1, caractérisé en ce que le joint (8) peut être facilement détaché à la main du fond (6) de la coque (3).

5. Couvercle selon la revendication 1, caractérisé en ce qu'une inscription (11) est reproduite sur le joint (8) qui adhère au vernis (9) de la coque (3), et en ce qu'au niveau de ladite inscription (11), un film anti-adhésif (10) est placé entre le vernis (9) et l'inscription (11), de façon à réduire l'adhésion de l'inscription (11) au vernis (9), déterminant ainsi une plus grande adhésion de l'inscription (11) sur un côté du joint (8).

6. Couvercle selon la revendication 5, caractérisé en ce que ledit film (10) se compose de pigments organiques, de fractions d'hydrocarbures aliphatiques, de résines polyesters et aminiques, et de cires végétales.

7. Couvercle selon la revendication 5, caractérisé en ce que ledit film (10) est réalisé dans un matériau transparent.

8. Couvercle selon la revendication 5, caractérisé en ce que ledit film (10) est réalisé dans un matériau pigmenté.

9. Couvercle selon la revendication 5, caractérisé en ce que ladite inscription (11) est réalisée en utilisant une encre UV qui peut être séchée dans des fours à rayons UV.

10. Couvercle selon la revendication 9, caractérisé en ce que ladite encre UV se compose de : pigments organiques, résines aminiques, polyesters et époxys, oligomères acryliques comprenant des di- et tri- esters d'alcools polyfonctionnels avec acide acrylique, benzophénone et cétones complexes ou leurs dérivés, cires polyéthylènes.

11. Couvercle selon la revendication 1, caractérisé en ce que ledit couvercle (1) consiste en un bouchon de bouteille comprenant une coque métallique (3), présentant de préférence la forme d'une couronne (7), et un joint (8) qui ne contient pas de chlorure de polyvinyle.

12. Couvercle selon la revendication 1, caractérisé en ce que ledit pigment métallique consiste en un métal qui n'est ni lourd ni toxique.

13. Procédé de fabrication d'un couvercle selon les revendications de 1 à 12, caractérisé en ce qu'il comprend les étapes opérationnelles suivantes :
- mélanger des résines synthétiques avec un hydrocarbure auquel au moins un pigment métallique est ajouté, pour obtenir le vernis (9) ;
- appliquer le vernis (9) sur un côté d'une tôle convenant à la réalisation des coques ;
- sécher le vernis (9) ;
- appliquer un film (10) sur le vernis (9) dans les zones où une inscription (11) sera positionnée ;
- sécher le film (10) ;
- réaliser l'inscription (11) dans les zones où le film (10) est appliqué, ladite inscription (11) adhérant moins au film (10) placé sur le vernis (9) qu'au joint (8) qui est ensuite placé dessus ;
- découper et former les coques (3) pour leur donner la forme voulue ;
- appliquer le joint (8) sur le vernis (9) se trouvant sur le fond (6) de la coque (3) et sur l'inscription (11).

14. Procédé selon la revendication 13, caractérisé en ce que le film (10) est appliqué en utilisant une première plaque.

15. Procédé selon la revendication 13, caractérisé en ce que les étapes de séchage sont effectuées à des températures qui varient entre 150 et 250 °C, avec des temps de séchage compris entre 5 et 20 minutes.

16. Procédé selon la revendication 13, caractérisé en ce que ladite inscription (11) est appliquée en utilisant une deuxième plaque.

17. Procédé selon la revendication 13, caractérisé en ce que ledit film (10) et ladite inscription (11) sont appliqués en utilisant la même plaque.

18. Procédé selon la revendication 13, caractérisé en ce que ladite inscription (11) est imprimée avec de l'encre UV.
